# EUROPÄISCHE PATENTSCHRIFT

(11) **EP 0 866 260 B1**
(45) Veröffentlichungstag und Bekanntmachung des Hinweises auf die Patenterteilung: **10.12.2003**
(21) Anmeldenummer: 98103166.9
(22) Anmeldetag: 23.02.1998
(51) Int. Cl.: F16M 11/04

(54) **Stativ**
Supporting device
Support

(30) Priorität: 20.03.1997 DE 19711572
(43) Veröffentlichungstag der Anmeldung: 23.09.1998
(73) Patentinhaber: Carl Zeiss, 89518 Heidenheim (Brenz) (DE)
(72) Erfinder: Brenner, Roland, 75499 Wallhausen (DE); Göhringer, Dietmar, 89537 Giengen (DE); Stich, Bruno, 73434 Aalen (DE); Gaida, Gerhard, Dr., 73430 Aalen (DE); Abramowsky, Heinz, 89537 Giengen (DE)

(56) Entgegenhaltungen:
- DD-A- 221 571
- DE-A- 3 739 080
- GB-A- 481 198
- GB-A- 2 074 337
- US-A- 5 253 832

## Beschreibung

Die Erfindung betrifft ein Stativ nach dem Oberbegriff von Anspruch 1.

Ein derartiges Stativ ist aus der US-A-5 253 832 bekannt. Dort ist ein Stativ für medizinisch-optische Ausrüstung beschrieben, die an einem Schwenkarm aufgenommen ist, welche an einer Ständereinheit schwenkbar gelagert ist. Um ein an dem Schwenkarm auftretendes Drehmoment zu kompensieren, ist in dem Schwenkarm eine Linearfeder vorgesehen. Diese Linearfeder stellt mit einen an einer Umlenkrolle geführten Kabelzug eine Ausgleichskraft bereit, die in einem Widerlagerpunkt am Stativfuß angreift. Für eine alternative Ausführungsform wird vorgeschlagen, die Linearfeder in den Stativfuß aufzunehmen und den entsprechenden Widerlagerpunkt am Schwenkarm vorzusehen.

Die DE 37 39 080 A1 beschreibt ein Stativ mit einem Stativständer und einen an dem Stativständer angelenkten Schwenkarm. Zum Ausgleich des auf den Schwenkarm einwirkenden Gewichts bzw. Drehmoments ist eine Feder vorgesehen, welche mit ihrem einen Ende am Stativständer befestigt ist und mit ihrem anderen Ende über ein Seil an dem Schwenkarm angelenkt ist, wobei das Seil von einem zwischen der Feder und dem Schwenkarm angeordneten Umlenkelement in seiner Richtung umgelenkt wird. Dadurch übt die Feder auf den Schwenkarm eine auf einen am Umlenkelement liegenden Widerlagerpunkt gerichtete Kraft aus, wobei sich der Widerlagerpunkt abhängig von der jeweiligen Stellung des Schwenkarms verschiebt.

Die Theorie dieses Stativs ist auch in dem Aufsatz "Gewichtsausgleich an feinmechanischen Geräten" von H. Hilpert in Feingerätetechnik, Heft 2/1965 zu finden (siehe Bild 7 auf Seite 63 dieses Aufsatzes). In diesem Aufsatz von H. Hilpert ist im ersten Absatz der linken Spalte von Seite 63 dargelegt, dass beim bekannten Stativ infolge der endlichen Umlenkrollenkrümmung, d.h. infolge der Verschiebung des Widerlagerpunkts beim Verschwenken des Schwenkarms, nur ein angenäherter Gewichtsausgleich erreicht werden kann.

Auch aus der DD 221 571 A1 ist ein gattungsgemäßes Stativ bekannt, welches entsprechend den Prinzipien in dem Aufsatz von H. Hilpert aufgebaut ist. Aber auch bei diesem Stativ wandert der Widerlagerpunkt in Abhängigkeit von der jeweiligen Stellung des Schwenkarms, da das Umlenkelement, welches das ein Ende der Feder mit dem Schwenkarm verbindende Seil umlenkt, von einer Schrägfläche mit endlicher Krümmung gebildet ist.

Ferner ist bei diesen beiden bekannten Stativen für die Anordnung des Umlenkelements und auch der Feder am ersten Stativteil ein gesonderter Bauraum erforderlich, wodurch die Bedienbarkeit und der mögliche Schwenkbereich des Schwenkarms eingeschränkt sein können.

Aufgabe der Erfindung ist es, ein gattungsgemäßes Stativ mit möglichst verbessertem Gewichtsausgleich und mit einer verbesserten Anordnung des Energiespeichers zur Verfügung zu stellen.

Diese Aufgabe wird durch die Merkmale in Anspruch 1 gelöst.

Indem die Feder als eine sich schwenkachsenseitig am Schwenkarm abstützende Druckfeder, insbesondere als Flachdrahtfeder ausgebildet ist, an deren schwenkachsenfernem Ende ein vorzugsweise über eine Umlenkrolle zum Widerlagerpunkt geführtes flexibles Kraftübertragungselement angreift, ist im Falle eines Federbruchs der mögliche Fallweg des Schwenkarms begrenzt. Dabei bietet das die Federkraft übertragende flexible Kraftübertragungselement zudem gute Schwingungsdämpfungseigenschaften. Um insbesondere bei Federbruch ein Verbiegen oder Ausweichen der Feder aus ihrer Längsrichtung zu vermeiden und deshalb auch als weitere Sicherheitsmaßnahme wird vorgeschlagen, die Feder auf einem in dem Schwenkarm verschiebbaren Rohr zu führen, dessen schwenkachsenfernes Ende mit dem flexiblen Kraftübertragungselement verbunden ist.

Wenn das Umlenkelement an dem zweiten Stativteil angeordnet ist und die Schwenkachse und der Widerlagerpunkt stets eine Vertikalebene bilden, ist insbesondere im Hinblick auf den Angriffspunkt der Gewichtsausgleichskraft am ersten, unverschwenkten Stativteil ein verbesserter Gewichtsausgleich möglich und es kann am ersten Stativteil auf eine platzraubende, schwenkbereichseinschränkende Umlenkanordnung für die Gewichtsausgleichskraft verzichtet werden.

Bei einer Ausführungsform, bei welcher der Widerlagerpunkt mittels einer Schraubspindel orthogonal zur Schwenkachse verschiebbar angeordnet ist, kann der optimale Gewichtsausgleich auch bei einer Veränderung des am Schwenkarm angreifenden Drehmoments durch geeignetes Verschieben des Widerlagerpunkts wiederhergestellt werden.

Bei einer weiteren, besonders kompakten Ausführungsform umfasst der Energiespeicher eine am Schwenkarm angeordnete Feder, wobei das Umlenkelement eine am Schwenkarm angeordnete Umlenkrolle ist.

Im Hinblick auf eine am Schwenkarm präzise und möglichst spielfrei geführte Feder ist es vorteilhaft, wenn das Rohr von der Umlenkrolle und einer Andruckrolle sowie über ein Gleitlager am Schwenkarm geführt ist.

Wenn das Rohr federseitig, d.h. auf seiner der Energiespeicherfeder zugewandten Seite, eine reibungsmindernde Beschichtung aufweist, können die Reibungskräfte der Feder am Rohr im Sinne eines minimalen Bewegungswiderstands des Schwenkarms und die mit der Reibung der Feder am Rohr verbundenen Geräusche minimiert werden.

Falls das flexible Kraftübertragungselement als Zahnriemen ausgebildet ist, der mit einer Verzahnung der Umlenkrolle kämmt, kann ein Schlupf an der Umlenkrolle weitgehend vermieden werden. Es ist aber auch denkbar, ein Kettenrad oder ein eine Seilrolle umschlingendes Seil an Stelle eines Zahnriemens vorzusehen.

Insbesondere in Verbindung mit einem als Zahnriemen ausgebildeten flexiblen Kraftübertragungselements ist es vorteilhaft, wenn die Drehbeweglichkeit der am Schwenkarm angeordneten Umlenkrolle sperrbar ist. Denn dadurch kann der Schwenkarm in seiner jeweiligen Stellung durch Feststellen der Umlenkrolle fixiert werden.

Bei einer weiteren Ausführungsform ist der Schwenkarm als im wesentlichen geschlossener Hohlkörper ausgebildet, der in seinem Inneren die Feder aufnimmt. Bei dieser Ausführungsform ist der Energiespeicher von äußeren Einflüssen weitgehend geschützt. Ferner weist der Schwenkarm dadurch eine hohe Torsionssteifigkeit auf, da er nur in dem Bereich zwischen Umlenkrolle und Schwenkachse eine Durchtrittsmöglichkeit für das flexible Kraftübertragungselement aufweisen muß.

Im folgenden wird die Erfindung anhand eines Ausführungsbeispiels und anhand der beigefügten Figuren erläutert.

Es zeigen:
- Figur 1: eine schematische Darstellung eines Ausführungsbeispiels des erfindungsgemäßen Stativs in Seitenansicht;
- Figur 2: ein Detail von Figur 1 in teilweise geschnittener Darstellung;
- Figur 3: eine Schnittdarstellung entlang der Linie III-III von Figur 3; und
- Figur 4: eine Figur 2 entsprechende Darstellung mit einer anderen Schwenkarmstellung.

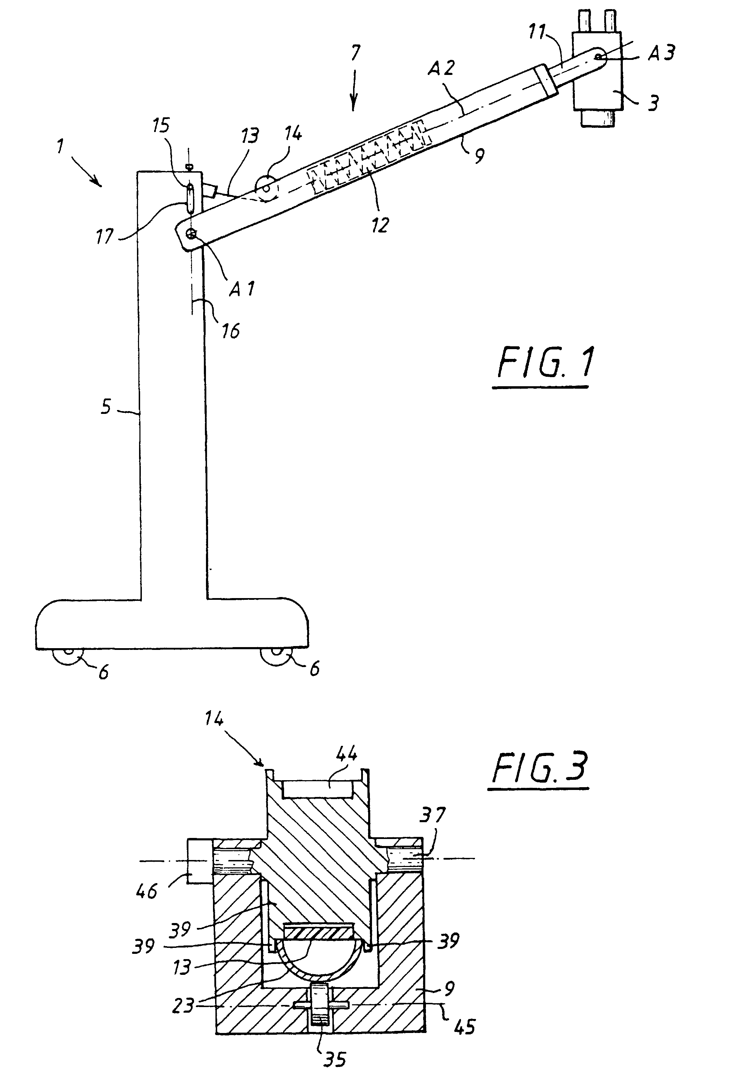

In Figur 1 ist ein erfindungsgemäßes Stativ 1 dargestellt, welches ein Operationsmikroskop 3 trägt. Das Stativ 1 weist einen auf Rollen 6 gelagerten Basisteil 5 und einen relativ zu diesem Basisteil 5 bewegbaren Stativteil 7 auf.

Dabei umfaßt der Stativteil 7 einen um eine zur Zeichenebene von Figur 1 orthogonale Schwenkachse A1 schwenkbar am Basisteil 5 angelenkten Schwenkarm 9 sowie einen am Schwenkarm 9 um die Achse A2 drehbar angelenkten Gerätearm 11, an welchem das Operationsmikroskop 3 um eine zur Zeichenebene von Figur 1 orthogonale Achse A3 verschwenkbar angeordnet ist.

Mit Hilfe eines Gewichtsausgleichsmechanismus am Stativ 1 soll das Operationsmikroskop 3 von dem Stativ 1 stets in einem labilen Gleichgewicht gehalten werden, um vom Operateur während einer Operation möglichst kräftefrei bewegt werden zu können.

Dazu übt ein innerhalb des Schwenkarms 9 angeordneter und in Figur 1 deshalb gestrichelt dargestellter Energiespeicher 12 mit Hilfe eines flexiblen Kraftübertragungselements 13 über eine Umlenkrolle 14 eine auf einen Widerlagerpunkt 15 am Basisteil 5 gerichtete Kraft auf den Schwenkarm 9 aus.

Durch den Widerlagerpunkt 15 und die Schwenkachse A1 wird eine in Figur 1 gestrichelt dargestellte und zur Zeichenebene von Figur 1 orthogonale Vertikalebene 16 definiert, welche unabhängig von der jeweiligen Schwenkstellung des Schwenkarmes 9 ist. Der Widerlagerpunkt 15 wandert also während einer Verschwenkung des Schwenkarmes 9 nicht.

Der Widerlagerpunkt 15 ist in einer Längsnut 17 des Basisteils 5 orthogonal zur Schwenkachse A1 verstellbar, um bei einer Gewichtsänderung des zu tragenden Geräts 3 das erwünschte labile Gleichgewicht wieder herstellen zu können.

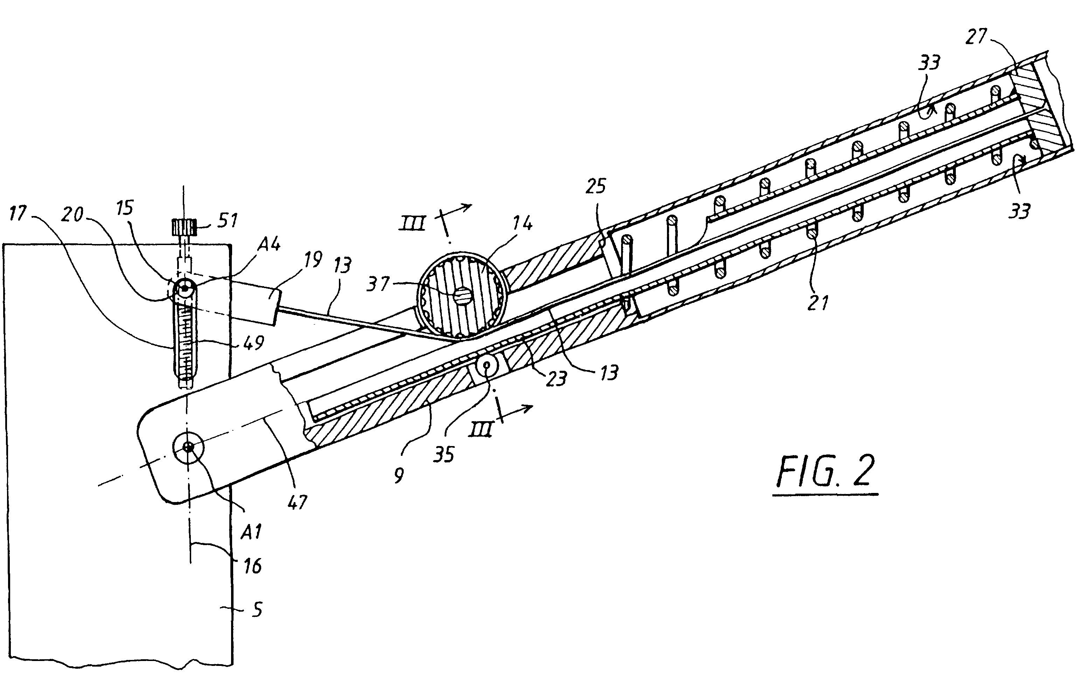

Figur 2 läßt die Lage des Widerlagerpunkts 15 im Detail erkennen und zeigt den im Schwenkarm 9 angeordneten Energiespeicher 12 in einer Schnittdarstellung.

Das flexible Kraftübertragungselement 13 weist basisteilseitig ein Gelenkstück 19 auf, welches an einem Achszapfen 20 des Basisteils 5 um eine zur Schwenkachse A1 parallele Gelenkachse A4 angelenkt ist. Der Widerlagerpunkt 15 liegt also im Schnittpunkt der Gelenkachse A4 und der Tangente an den Abschnitt des flexiblen Kraftübertragungselements 13 zwischen Gelenkstück 19 und Umlenkrolle 14.

Der Energiespeicher 12 umfaßt eine im Innern des als Hohlkörper ausgebildeten Schwenkarms 9 aufgenommene Flachdrahtfeder 21. Die Flachdrahtfeder 21 ist auf einem in dem Schwenkarm 9 beweglichen Rohr 23 geführt und stützt sich mit ihrem zur Schwenkachse A1 nahen Ende an einer Ringschulter 25 im Innern des Schwenkarms 9 und mit ihrem anderen Ende an einem Flansch 27 des Rohrs 23 ab. An dem Flansch 27 ist ferner das als Zahnriemen 13 ausgebildete flexible Kraftübertragungselement befestigt, welches von der Umlenkrolle 14 in seiner Richtung zum Widerlagerpunkt 15 hin umgelenkt wird.

Da der Achszapfen 20 an dem Läufer einer vertikal ausgerichteten Schraubspindel 49 angeordnet ist, kann der Widerlagerpunkt 15 mit Hilfe einer Spindelverstellschraube 51 in dem Vertikalschlitz 17 orthogonal zur Schwenkachse A1 und innerhalb der Vertikalebene 16 verschoben werden, um auch bei einer Veränderung des Gewichts des Operationsmikroskops 3 das gewünschte labile Gleichgewicht wiederherstellen zu können.

Durch die dargestellte, erfindungsgemäße Anordnung von Druckfeder 21, Zahnriemen 13, Widerlagerpunkt 15 und Schwenkachse A1 ist ein dem in Bild 7 des Aufsatzes von H. Hilpert dargestelltes Stativ mit Gewichtsausgleichsmechanismus funktional entsprechendes Stativ verwirklicht. Wobei die Abstände zwischen Schwenkachse A1 und Widerlagerpunkt 15 sowie zwischen Schwenkachse A1 und Umlenkrolle 14 so zu wählen sind, daß die Bedingung (22) im Aufsatz von H. Hilpert erfüllt ist. Dabei ist vorausgesetzt, daß der Angriffspunkt der auf den Schwenkarm 9 ein Drehmoment um die Schwenkachse A1 ausübenden Massen auf einer die Schwenkachse A1 schneidenden Tangente 47 der Umlenkrolle 14 liegt bzw. durch z.B. aus der EP 433 426 bekannte Verstellvorrichtungen in diese Tangente 47 verschoben werden kann.

Das die Flachdrahtfeder 21 tragende Rohr 23 wird über seinen Flansch 27 von einem an der Innenwandung des Schwenkarms 9 ausgebildeten Gleitlager 33 und von der Umlenkrolle 14 sowie einer Andruckrolle 35 spielfrei geführt.

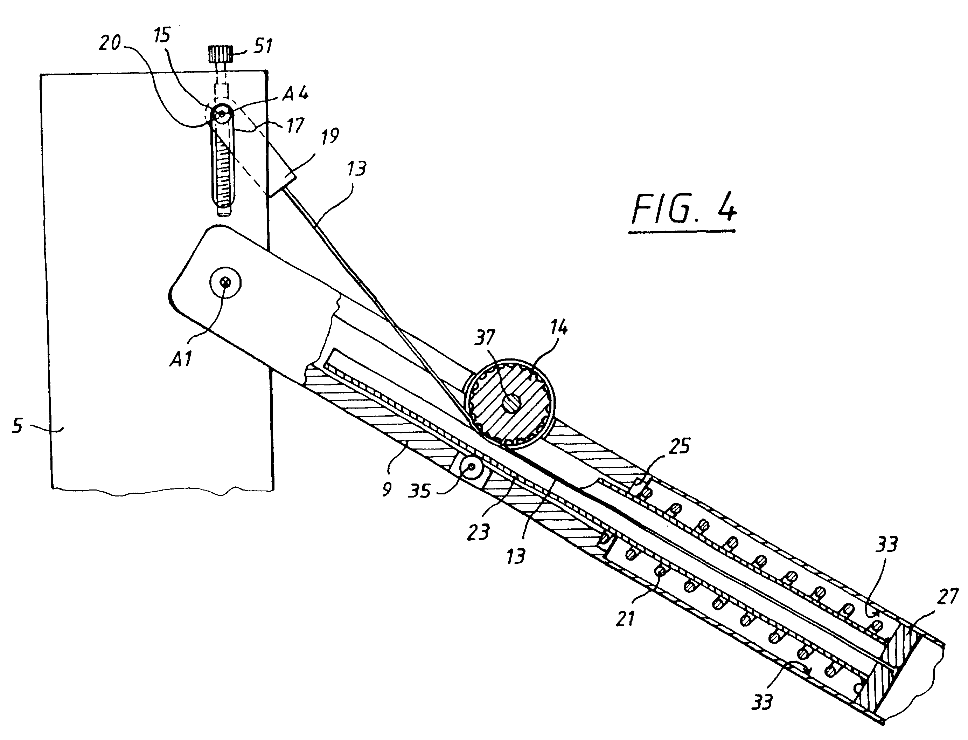

In Figur 3 ist diese schwenkachsenseitige Führung des Rohrs 23 im Schnitt entlang der durch die Pfeile III bezeichneten Schnittlinie dargestellt. Die Umlenkrolle 14 ist um eine zur Schwenkachse A1 parallele Achse 37 drehbar am Schwenkarm 9 gelagert und weist zwei Flansche 39 auf, welche das im Bereich der Umlenkrolle 14 halbkreiszylindrische Rohr 23 zwischen sich aufnehmen. Die um eine zur Drehachse 37 parallele Drehachse 45 drehbar angeordnete Andruckrolle 35 drängt das Rohr 23 gegen die Umlenkrolle 14.

An der Drehachse 37 ist ferner ein von außerhalb des Schwenkarmes 9 bedienbares Feststellelement 46 angebracht, durch welches die Drehbarkeit der Umlenkrolle 14 um die Drehachse 37 sperrbar ist. Aufgrund des mit einer Verzahnung 44 der Umlenkrolle 14 kämmenden Zahnriemens 13 kann deshalb die jeweilige Stellung des Schwenkarms 9 mit Hilfe des Sperrelements 46 festgestellt werden.

In Figur 4 ist der Schwenkarm 9 zusammen mit einem Teilbereich des Basisteils 5 in einer von Figur 2 abweichenden Schwenkstellung gezeigt.

## Patentansprüche

1. Stativ (1) für ein bewegbar anzuordnendes Gerät (3), umfassend
- einen ersten Stativteil (5),
- einen relativ zum ersten Stativteil (5) bewegbaren zweiten Stativteil (7) mit einem an dem ersten Stativteil (5) angelenkten, um eine Schwenkachse (A1) schwenkbaren Schwenkarm (9), und
- einen Energiespeicher (12), welcher mittels eines Umlenkelements (14) eine auf einen Widerlagerpunkt (15) am ersten Stativteil (5) gerichtete Kraft auf den Schwenkarm (9) ausübt, wobei
- der Energiespeicher (12) eine am Schwenkarm (9) angeordnete Feder (21) umfasst
**dadurch gekennzeichnet, dass**
- die Feder eine sich schwenkachsenseitig am Schwenkarm (9) abstützende Druckfeder (21) ist, an deren schwenkachsenfernem Ende ein über das Umlenkelement (14) zum Widerlagerpunkt (15) geführtes, flexibles Kraftübertragungselement (13) angreift, und
- die Feder auf einem in dem Schwenkarm (9) verschiebbaren Rohr (23) geführt ist, dessen schwenkachsenfemes Ende mit dem flexiblen Kraftübertragungselement (13) verbunden ist.

2. Stativ (1) nach Anspruch 1, **dadurch gekennzeichnet, dass** die Druckfeder eine Flachdrahtfeder (21) ist.

3. Stativ (1) nach Anspruch 1, **dadurch gekennzeichnet, dass** die Schwenkachse (A1) und der Widerlagerpunkt (15) stets eine Vertikalebene (16) bilden.

4. Stativ (1) nach Anspruch 1 oder 2, **dadurch gekennzeichnet, dass** das Umlenkelement (14) an dem zweiten Stativteil (7) angeordnet ist.

5. Stativ (1) nach Anspruch 1, 2 oder 3, **dadurch gekennzeichnet, dass** das Umlenkelement als Umlenkrolle (14) ausgebildet ist.

6. Stativ (1) nach Anspruch 5, **dadurch gekennzeichnet, dass** die Drehbeweglichkeit der am Schwenkarm (9) angeordneten Umlenkrolle (14) sperrbar ist.

7. Stativ (1) nach Anspruch 5 oder 6, **dadurch gekennzeichnet, dass** das flexible Kraftübertragungselement als Zahnriemen (13) ausgebildet ist, der mit einer Verzahnung (44) der Umlenkrolle (14) kämmt.

8. Stativ (1) nach einem der Ansprüche 1 bis 7, **dadurch gekennzeichnet, dass** der Widerlagerpunkt (15) an dem ersten Stativteil (5) orthogonal zur Schwenkachse (A1) verschiebbar ist.

9. Stativ (1) nach Anspruch 8, **dadurch gekennzeichnet, dass** zum Verschieben des Widerlagepunkts (15) eine Schraubspindel (49) vorgesehen ist.

10. Stativ (1) nach einem der Ansprüche 1 bis 9, **dadurch gekennzeichnet, dass** das Rohr (23) von der Umlenkrolle (14) und einer Andruckrolle (35) sowie einem Gleitlager (33) am Schwenkarm (9) spielfrei geführt ist.

11. Stativ nach einem der Ansprüche 1 bis 10, **dadurch gekennzeichnet, dass** das Rohr federseitig eine reibungsmindernde Beschichtung aufweist.

12. Stativ (1) nach einem der Ansprüche 3 bis 11, **dadurch gekennzeichnet, dass** der Schwenkarm (9) als im wesentlichen geschlossener Hohlkörper ausgebildet ist, der in seinem Inneren die Feder (21) aufnimmt.

## Claims

1. Stand (1) for a unit (3) which is to be moveably arranged, comprising
- a first stand part (5),
- a second stand part (7), which can be moved relative to the first stand part (5) and has a swivel arm (9) which is pivoted at the first stand part (5) and can swivel about a swivel axis (A1), and
- an energy store (12) which uses a deflecting element (14) to exert on the swivel arm (9) a force directed onto an abutment point (15) on the first stand part (5),
- the energy store (12) comprising a spring (21) arranged on the swivel arm (9),
**characterized in that**
- the spring is a compression spring (21) which is supported on the swivel arm (9) on the side of the swivel axis, and on whose end remote from the swivel axis there acts a flexible force transmitting element (13) guided via the deflecting element (14) to the abutment point (15), and
- the spring is guided on a tube (23) which can be displaced in the swivel arm (9) and whose end remote from the swivel axis is connected to the flexible force transmitting element (13).

2. Stand (1) according to Claim 1, **characterized in that** the compression spring is a flat wire spring (21).

3. Stand (1) according to Claim 1, **characterized in that** the swivel axis (A1) and the abutment point (15) always form a vertical plane (16).

4. Stand (1) according to Claim 1 or 2, **characterized in that** the deflecting element (14) is arranged on the second stand part (7).

5. Stand (1) according to Claim 1, 2 or 3, **characterized in that** the deflecting element is designed as a deflecting roller (14).

6. Stand (1) according to Claim 4, **characterized in that** the rotational mobility of the deflecting roller (14) arranged on the swivel arm (9) can be blocked.

7. Stand (1) according to Claim 5 or 6, **characterized in that** the flexible force transmitting element is constructed as a tooth belt (13) which meshes with a tooth system (44) of the deflecting roller (14).

8. Stand (1) according to one of Claims 1 to 7, **characterized in that** the abutment point (15) on the first stand part (5) can be displaced orthogonally relative to the swivel axis (A1).

9. Stand (1) according to Claim 8, **characterized in that** a screw (49) is provided for displacing the abutment point (15).

10. Stand (1) according to one of Claims 1 to 9, **characterized in that** the tube (23) is guided without play on the swivel arm (9) by the deflecting roller (14) and a pressure roller (35) as well as a slide bearing (33).

11. Stand according to one of Claims 1 to 10, **characterized in that** the tube has a friction-reducing coating on the spring side.

12. Stand (1) according to one of Claims 3 to 11, **characterized in that** the swivel arm (9) is constructed as substantially closed hollow body which holds the spring (21) in its interior.

## Revendications

1. Support (1) pour un appareil (3) à agencer de manière déplaçable, comprenant
- une première partie de support (5),
- une deuxième partie de support (7) déplaçable par rapport à la première partie de support (5) avec un bras pivotant (9) articulé sur la première partie de support (5) et pouvant pivoter autour d'un axe de pivotement (A1), et
- un accumulateur d'énergie (12) qui exerce, au moyen d'un élément de déflexion (14), une force sur le bras pivotant (9) orienté vers un point de butée (15) sur la première partie de support (5)
- l'accumulateur d'énergie (12) comprenant un ressort (21) disposé sur le bras pivotant (9),
**caractérisé en ce que**
- le ressort est un ressort de pression (21) s'appuyant du côté de l'axe de pivotement contre le bras pivotant (9), à l'extrémité éloignée de l'axe de pivotement duquel vient en prise un élément de transfert de force (13) flexible guidé par le biais de l'élément de déflexion (14) vers le point de butée (15), et
- le ressort est guidé sur un tube (23) déplaçable dans le bras pivotant (9), dont l'extrémité éloignée de l'axe de pivotement est connectée à l'élément de transfert de force (13) flexible.

2. Support (1) selon la revendication 1, **caractérisé en ce que** le ressort de pression est un ressort à fil plat (21) .

3. Support (1) selon la revendication 1, **caractérisé en ce que** l'axe de pivotement (A1) et le point de butée (15) forment toujours un plan vertical (16).

4. Support (1) selon la revendication 1 ou 2, **caractérisé en ce que** l'élément de déflexion (14) est disposé sur la deuxième partie de support (7).

5. Support (1) selon la revendication 1, 2 ou 3, **caractérisé en ce que** l'élément de déflexion est réalisé en tant que poulie de renvoi.

6. Support (1) selon la revendication 4, **caractérisé en ce que** le mouvement de rotation de la poulie de renvoi (14) disposée sur le bras pivotant (9) peut être bloqué.

7. Support (1) selon la revendication 5 on 6, **caractérise en ce que** l'élément de transfert de force flexible est réalisé en tant que courroie dentée (13), qui s'engrène avec une denture (44) de la poulie de renvoi (14).

8. Support (1) selon l'une quelconque des revendications 1 à 7, **caractérisé en ce que** le point de butée (15) sur la première partie de support (5) peut être déplacé perpendiculairement à l'axe de pivotement (A1).

9. Support (1) selon la revendication 8, **caractérisé en ce que** pour le déplacement du point de butée (15), on prévoit une broche filetée (49).

10. Support (1) selon l'une quelconque des revendications 1 à 9, **caractérisé en ce que** le tube (23) est guidé sans jeu par la poulie de renvoi (14) et une poulie de pression (35) ainsi qu'un palier lisse (33) sur le bras pivotant (9).

11. Support selon l'une quelconque des revendications 1 à 10, **caractérisé en ce que** le tube présente, du côte du ressort, un revêtement réduisant les frottements.

12. Support (1) selon l'une quelconque des revendications 3 à 11, **caractérisé en ce que** le bras pivotant (9) est réalisé en tant que corps creux essentiellement fermé, qui reçoit en son intérieur le ressort (21).
